# EUROPÄISCHE PATENTANMELDUNG

(11) **EP 1 088 631 A1**
(43) Veröffentlichungstag der Anmeldung: **04.04.2001**
(21) Anmeldenummer: 00119453.9
(22) Anmeldetag: 14.09.2000
(51) Int. Cl.: B27K 3/50

(54) **Holzschutzmittel, Verfahren zu ihrer Herstellung und ihre Verwendung**

(30) Priorität: 30.09.1999 DE 19947182
(71) Anmelder: Wacker-Chemie GmbH, 81737 München (DE)
(72) Erfinder: Wimmer, Thomas, Dr., 84489 Burghausen (DE); Irmsgard, Finn, Dr., 6000 Kolding (DK)
(74) Vertreter: Potten, Holger

(57) **Zusammenfassung**

Die Erfindung betrifft ein wäßriges oder wasserverdünnbares Holzschutzmittel dadurch gekennzeichnet, daß es einen Komplex bestehend aus einem Cyclodextrin-Derivat enthaltend ein hydrophoben Wirkstoff enthält. Das erfindungsgemäße Holzschutzmittel weist eine im Vergleich zu bekannten wäßrigen oder wasserverdünnbaren Holzschutzmitteln erhöhte Eindringtiefe und erhöhte Wirksamkeit gegenüber Holzschädlingen auf.

## Beschreibung

Die Erfindung betrifft Holzschutzmittel, Verfahren zu ihrer Herstellung und Ihre Verwendung.

Bei der Zerstörung von Holz und Holzwerkstoffen, z.B. durch Abbau der Cellulose oder anderer Holzbestandteile oder bei der Holzentwertung durch z.B. Verfärbung, sog. Bläue, spielen Mikroorganismen wie Pilze und Bakterien, Termiten, Insekten und deren Larven eine entscheidende Rolle. Formulierungen für den Holzschutz enthalten deshalb in der Regel fungizide und/oder insektizide Wirksubstanzen.

Holzschutzmittel sollen möglichst tief in das Holz eindringen und eine möglichst geringe Umweltbelastung bei der Verarbeitung sowie durch das behandelte Holz darstellen.

Holzschutzmittel können grob in drei Kategorien unterteilt werden:
A: Lösemittelfreie ölige Holzschutzmittel, z.B. Steinkohleteer-Destillate
B: Wasserlösliche, meist anorganische Salze, z.B. Chromate, Chrom-Kupfer-Arsenate
C: Lösemittelhaltige Formulierungen mit fungiziden und insektiziden Wirkstoffen.

Holzschutzmittel der Gruppe A sind aufgrund des starken Eigengeruchs, carcinogenen Potentials der Inhaltsstoffe und mangelnder Überstreichbarkeit nur im Außenbereich (z.B. Eisenbahnschwellen) einsetzbar. Aufgrund des Gefährdungspotentials durch Schwermetalle kommen auch Holzschutzmittel der Gruppe B ausschließlich im Außenbereich zum Einsatz.

Die größte Holzschutzmittelgruppe bilden Formulierungen der Gruppe C. Sie beinhalten meist eine Kombination von verschiedenen Wirkstoffen in einem niedrig siedenden Lösungsmittel, um ein breites Anwendungsspektrum gegenüber verschiedenen Mikroorganismen und Insekten zu erreichen.

Als fungizide Wirkstoffe wurden zunächst chlorierte Phenole, wie z.B. Pentachlorphenol, eingesetzt. Diese wurden aufgrund der möglichen Bildung von Dioxinen in Deutschland verboten. Als schwermetallhaltige Fungizide werden noch Kupfer-und Zinknaphthenate, sowie z.B. Tributylzinnoxid verwendet. Neuere Wirkstoffe, die zunächst für agrochemische Einsatzzwecke entwickelt wurden, sind Isothiazolinone, Carbamate und Triazole. Für den Schutz vor Insekten und deren Larven werden chlorierte Kohlenwasserstoffe (z.B. Lindan) mehr und mehr durch Phosphatester, Carbamate und synthetische Pyrethroide ersetzt.

Lösungsmittelhaltige Holzschutzformulierungen sind z.B. die kommerziell erhältlichen Produkte GORI® 22, GORI® 88 (hergestellt und vertrieben vom GORI, Kolding, Dänemark) oder Bondex® Professionel Lazurex von der Fa. Xylochimie, Albi, F. Nachteilig bei den Holzschutzformulierungen der Gruppe C ist die Verwendung von organischen Lösungsmitteln, die bei Applikation ganz oder zumindest teilweise in die Umwelt abdampfen.

Da die überwiegende Zahl der fungiziden und insektiziden Wirkstoffe in Wasser nur sehr gering löslich sind, gelingt es nur durch die Verwendung von Emulgatoren, selbstemulgierende Harze und Tenside wasserbasierende Formulierungen herzustellen. Diese Emulsionen haben im Vergleich zu den lösungsmittelbasierenden Systemen den Nachteil, daß sie nicht so tief in das behandelte Holz eindringen. Außerdem ist die Nachbehandlung durch die Emulgatoren erschwert. Beispiele für solche Holzschutzmittel sind z.B. die Produkte GORI® 77, hergestellt und vertrieben von GORI, Kolding, DK.

Aus DE 19727284 sind wäßrige oder wasserverdünnbare Holzschutzmittel bekannt, die als Wirkstoff Amine der allgemeinen Formel R-NR 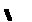 -C1-8-Alkylen-Y enthalten.

Das europäische Patent EP 0503320 beschreibt Cyclohexaamylose (α-Cyclodextrin) als Amylase-Inhibitor in Holzschutzmitteln.

Die Aufgabe der vorliegenden Erfindung ist es, ein wäßriges oder wasserverdünnbares Holzschutzmittel bereitzustellen, daß eine im Vergleich zu bekannten wäßrigen oder wasserverdünnbaren Holzschutzmitteln erhöhte Eindringtiefe und erhöhte Wirksamkeit gegenüber Holzschädlingen aufweist.

Die Aufgabe wird gelöst durch ein Holzschutzmittel, das dadurch gekennzeichnet ist, daß es einen Komplex enthält bestehend aus einem Cyclodextrin-Derivat enthaltend einen hydrophoben Wirkstoff.

Das erfindungsgemäße Holzschutzmittel kann als anwendungsfertige wäßrige Lösung, wie beispielsweise als Imprägnierlösung, Lasur, Farblasur oder Primer vorliegen.

Es kann jedoch auch in Form eines wäßrigen Konzentrats vorliegen, das vom Endverbraucher durch Zugabe von Wasser auf Verarbeitungskonzentration gebracht wird.

Es kann ferner als ein in Wasser lösliches festes Holzschutzmittel vorliegen.

Die Cyclodextrin-Derivate sind im erfindungsgemäßen Holzschutzmittel vorzugsweise ausgewählt aus der Gruppe der alkylierten, hydroxyalkylierten, acylierten, branched und Sulfoalkylether substituierten α, β oder γ-Cyclodextrine.

Bevorzugt sind die Cyclodextrin-Derivate ausgewählt aus der Gruppe der alkylierten α, β oder γ-Cyclodextrine und hydroxyalkylierten α, β oder γ-Cyclodextrine.

Besonders bevorzugt sind die Cyclodextrin-Derivate ausgewählt aus der Gruppe der alkylierten α, β oder γ-Cyclodextrine.

Insbesondere bevorzugt sind die Cyclodextrin-Derivate ausgewählt aus der Gruppe der methylierten α, β oder γ-Cyclodextrine.

Bei dem komplexierten hydrophoben Wirkstoff handelt es sich vorzugsweise um ein hydrophobes Fungizid oder ein hydrophobes Insektizid.

Insbesondere bevorzugt wird als Wirkstoff eine Mischung verschiedener Fungizide und/oder Insektizide verwendet.

Bei dem Fungizid handelt es sich vorzugsweise um ein Fungizid aus der Gruppe Triazole, Tolylfluanid (N-Dichlorfluormethylthio-N'N'-dimethyl-N-p- tolylsulfamid), Dichlorfluanid (N-Dichlorfluormethylthio-N',N'-dimethyl-N-phenylsulfamid), IPBC (3-Iodpropargyl-N-butylcarbamat), Isothiazolinone (N-Octyl-isothiazolin-3-on) und 4,5-Dichlor-N-Octyl-isothiazolin-3-on.

Besonders bevorzugt handelt es sich um ein Fungizid ausgewählt aus der Gruppe Propiconazol (1-(2,4-Dichlorphenyl)-4-propyl-1,3-dioxolan-2-yl)-methyl)-1H-1,2,4-triazol), Tebuconazol ((RS)-1-(4-Chlorphenyl)-4,4-dimethyl-3-(1 H- 1,2,4- triazol- 1-ylmethyl)pentan- 3- ol), Azaconazol (1-(2,4-Dichlorphenyl)-1,3-dioxolan-2-yl)-methyl)-1H-1,2,4-triazol), Fenbuconazol (4-(4-Chlorphenyl)-2-phenyl-2-(1H-1,2,4-triazol- 1- yl-methyl)butyronitril) und Triadimenol ((1 RS,2 RS;1 RS,2 SR)-1-(4-Chlorphenoxy)-3,3-dimethyl-1-(1 H-1,2,4- triazol- 1-yl)butan- 2- ol), oder 4,5-Dichlor-N-Octyl-isothiazolin-3-on. Insbesondere bevorzugt handelt es sich um ein Fungizid, ausgewählt aus der Gruppe Propiconazol oder Tebuconazol.

Bei dem Insektizid handelt es sich vorzugsweise um ein synthetisches Pyrethroid, (wie z.B. Cypermethrin, Deltamethrin, Permethrin, Alphamethrine) , Bifenthrin, Fipronil, ein Benzolharnstoffderivat, (wie beispielsweise Hexaflumuron, Teflubenzuron oder Flufenoxuron), einen Phosphorsäureester (wie z.B. Phoxim, Parathion, Fenitrothion, Trichlorphon oder Dichlorphos), oder ein Carbaznat (wie z.B. Propoxur, Pirimicarb oder Aldicarb).

Besonders bevorzugt handelt es sich um Cypermethrin, Deltamethrin, Permethrin oder Bifenthrin.

Eine erfindungsgemäße wäßrige Holzschutzformulierung enthält Wasser sowie vorzugsweise 0,01 - 2 Gew.% hydrophoben Wirkstoff und vorzugsweise 1 - 20 Gew.% Cyclodextrin-Derivat, bevorzugt 0,5 - 1,5 Gew.% hydrophoben Wirkstoff und 3 - 16 % Cyclodextrin-Derivat.

Ein erfindungsgemäßes, wäßriges Holzschutzkorizentrat enthält Wasser sowie vorzugsweise 1- 5 Gew.% hydrophoben Wirkstoff und vorzugsweise 5 - 70 Gew.% Cyclodextrin-Derivat, besonders bevorzugt 2 - 6 Gew.% hydrophoben Wirkstoff und 20 - 50 Gew.% Cyclodextrin-Derivat.

Ein in Wasser lösliches festes Holzschutzmittel enthält vorzugsweise 2- 20 Gew.% hydrophoben Wirkstoff und 50 - 98 Gew.% Cyclodextrin-Derivat, besonders bevorzugt 5 - 10 Gew.% hydrophoben Wirkstoff und 70 - 95 Gew.% Cyclodextrin-Derivat.

In dem erfindungsgemäßen Holzschutzmittel können ferner in den jeweils üblichen Einsatzkonzentrationen (in der Regel etwa 0,001 - 5 Gew.%) enthalten sein:
Bakterizide, z.B. Chlormethylisothiazolinon, Methylisothiazolinon, Aldehyde (z.B. 0.001% -0.2%)
Borverbindungen, wie z.B. Borsäure, Borax
Bindemittel wie z.B. dispergierbare und emulgierbare Kunstharze (z.B. Polyvinylacetat, Polyesterharz, Acrylate, Siliconharz)
Netzmittel
In geringen Mengen auch Lösungsvermittler (etwa 0,01 - 2 Gew. %): Alkohole, Glykole, Glykolether
Korrosionsschutzmittel
Verdickungsmittel
UV-Stabilisatoren
Sikkative
Farbstoffe
Pigmente
pH-Regulatoren

Aber auch die beschriebenen wäßrigen CD-Komplexe allein sind als Holzschutzmittel wirksam. Die Erfindung betrifft daher ebenfalls die Verwendung von Komplexen aus einem CD Derivat und einem hydrophoben Wirkstoff als Holzschutzmittel, wobei vorzugsweise Komplexe der bereits genannten Derivate mit den bereits genannten hydrophoben Wirkstoffen verwendet werden.

Die Herstellung der Cyclodextrin / Wirkstoff-Komplexe erfolgt nach an sich üblichen Verfahren, wie z.B. in J. Sejtli, 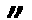 Cyclodextrin Technology", Kluwer Academic Publishers, 1988, S. 86 ff beschrieben.
So können z.B. die Cyclodextrin / Wirkstoff-Komplexe durch Rühren oder Schütteln von wäßrigen Lösungen von Cyclodextrinderivaten mit dem Wirkstoff oder mit Lösungen des Wirkstoffs bei Temperaturen von 10 - 80°C hergestellt werden. Beim Rühren kommen dabei gängige Rührwerkzeuge oder Dispergatoren zum Einsatz. Gegebenenfalls können bei diesem Verfahren auch Cosolventien wie z.B. niedere Alkohole, Aceton, Glykole, Ethylacetat eingesetzt werden.

Bei einer weiteren Methode zur Herstellung der Komplexe werden die Cyclodextrinderivate mit Wasser im Verhältnis 6:4 bis 9:1 zu einer Paste angeteigt und die Paste mit dem Wirkstoff bei 20 - 80 °C ca. 10 - 200 Minuten geknetet. Die Paste kann z. B. im Vakuum getrocknet werden, um zu festen, erfindungsgemäßen Holzschutzmitteln zu gelangen. Weiterhin kann die Paste mit Wasser auf die gewünschte Anwendungszeit verdünnt werden.

Des Weiteren können das Cyclodextrinderivat und der Wirkstoff in einem gemeinsamen organischem Lösungsmittel, wie beispielsweise C₁-C₆-Alkohole, C₃-C₆-Ketone, Ethylacetat, Methylacetat, Glykole gelöst werden. Das Lösungsmittel kann anschließend durch Trocknen, beispielsweise im Vakuum, entfernt werden.

Hierdurch werden in der Regel Feststoffe erhalten, die in Wasser gelöst werden können.

Werden die erfindungsgemäßen flüssigen Holzschutzmittel getrocknet, um ein erfindungsgemäßes festes Holzschutzmittel zu erhalten, kommen übliche Methoden wie z.B. Sprühtrocknen oder Trocknen im Vakuum zum Einsatz.

Die Holzschutzmittel in fester Form können z.B. mittels granulieren, palettieren, kompaktieren, sieben, sichten, tablettieren oder verpacken in wasserlösliche Folien verarbeitet werden.

Des weiteren betrifft die Erfindung ein Verfahren zur Herstellung eines wäßrigen Holzschutzmittels, das dadurch gekennzeichnet ist, daß ein festes Holzschutzmittel enthaltend einen Komplex aus einem hydrophoben Wirkstoff und einem Cyclodextrin-Derivat in Wasser gelöst wird.

Die Erfindung betrifft ferner ein Verfahren zum Schutz von Holz und Holzwerkstoffen, das dadurch gekennzeichnet ist, daß Holz oder ein Holzwerkstoff mit einer wäßrigen Formulierung, enthaltend einen hydrophoben Wirkstoff und ein Cyclodextrin-Derivat, behandelt wird und anschließend getrocknet wird.

Die Behandlung erfolgt dabei mittels an sich bekannter Verfahren wie mittels Sprühen, Streichen, Spritzen oder Imprägnierverfahren wie Tauchen, Tränken, Druck, Vakuum und Doppelvakuumverfahren.

Eine erfindungsgemäße Holzschutzformulierung zeigt im Vergleich zu bekannten wasserverdünnbaren Formulierungen unerwartete Vorzüge. Sowohl nach Hitzebehandlung, wie auch nach Auslaugen wurden in den erfindungsgemäßen Formulierungen geringere Grenzwerte für die Wirkstoffe (ermittelt nach DIN EN 113) gefunden als in bekannten wasserverdünnbaren Formulierungen. Vor allem die geringeren Grenzwerte nach dem Auslaugen mit Wasser sind völlig unerwartet, da der Fachmann erwarten würde, daß die Wirkstoffe durch das Solubilisieren mit Cyclodextrinen auch schneller ausgelaugt werden, und damit die Grenzwerte höher werden.

Die folgenden Beispiele dienen der weiteren Erläuterung der Erfindung:

### Beispiel 1: Bestimmung der Phasenlöslichkeitsdiagramme von Tebuconazol mit verschiedenen Cyclodextrin-Derivaten

Von den zu untersuchenden Cyclodextrin-Derivaten (Produkte der Wacker-Chemie GmbH) werden Mengen entsprechend 10,0 g wasserfreier Substanz in einem 100 ml Meßkolben eingewogen und mit 0,1 molarem Phosphat-Puffer (K₂HPO₄ / KH₂PO₄) bis zur Meßmarke aufgefüllt. Aus dieser 10%-igen (w/v) Stammlösung werden durch Verdünnen Lösungen mit Konzentrationen von 1% bis 10% (w/v) hergestellt. Als Vergleich dient reiner 0,1 molarer Phosphatpuffer. Je 1 ml der Cyclodextrin-Derivatlösung wird mit ca. 30 mg Tebuconazol versetzt und 48 Stunden bei Raumtemperatur geschüttelt. Die Proben werden anschließend mikrofiltriert (0,2 µm-Filter). Die Konzentration von Tebuconazol in den klaren Filtraten wird durch HPLC bestimmt.

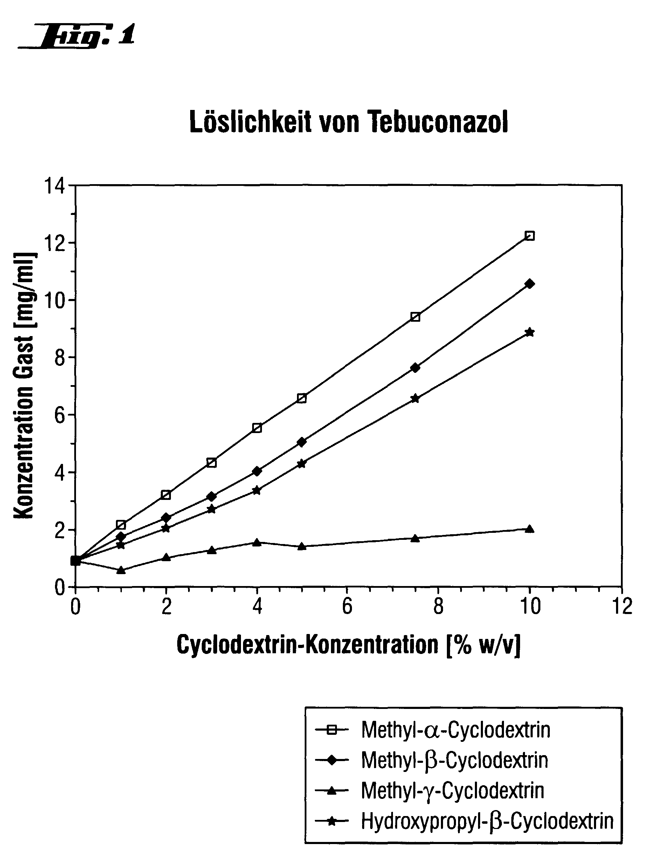

Die Ergebnisse sind in Fig. 1 dargestellt. Es ist ersichtlich, daß Tebuconazol in Wasser mit Hilfe von methylierten oder hydroxypropylierten Cyclodextrinen solubilisiert werden kann.

### Beispiel 2: Bestimmung der Phasenlöslichkeitsdiagramme von Propiconazol mit verschiedenen Cyclodextrin-Derivaten

Die Versuche wurden analog Beispiel 1 unter Verwendung von Propiconazol durchgeführt.

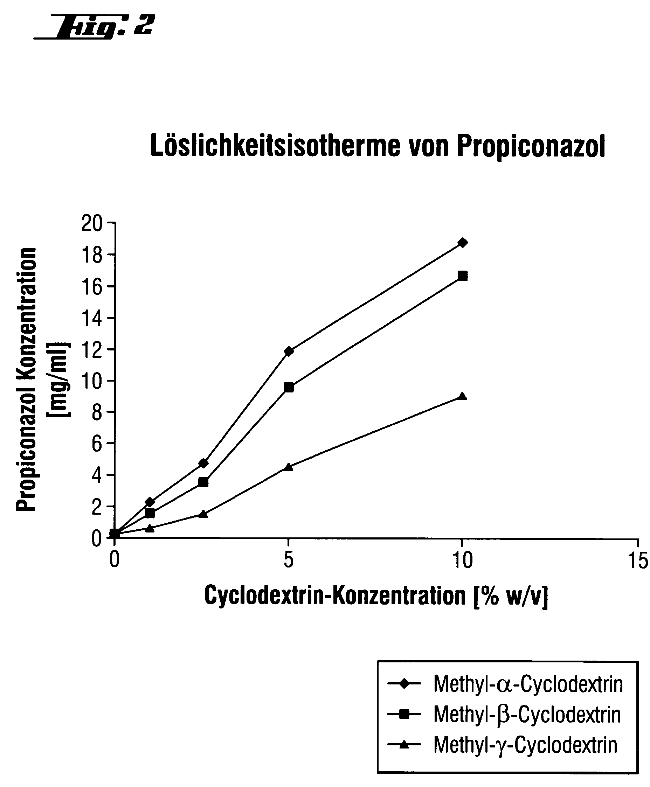

Die Ergebnisse sind in Fig. 2 dargestellt. Es ist ersichtlich, daß Propiconazol in Wasser mit Hilfe von methylierten Cyclodextrinen solubilisiert werden kann.

### Beispiel 3: Bestimmung der Phasenlöslichkeitsdiagramme von Bifenthrin mit verschiedenen Cyclodextrin-Derivaten

Die Versuche wurden analog Beispiel 1 unter Verwendung von Bifenthrin durchgeführt.

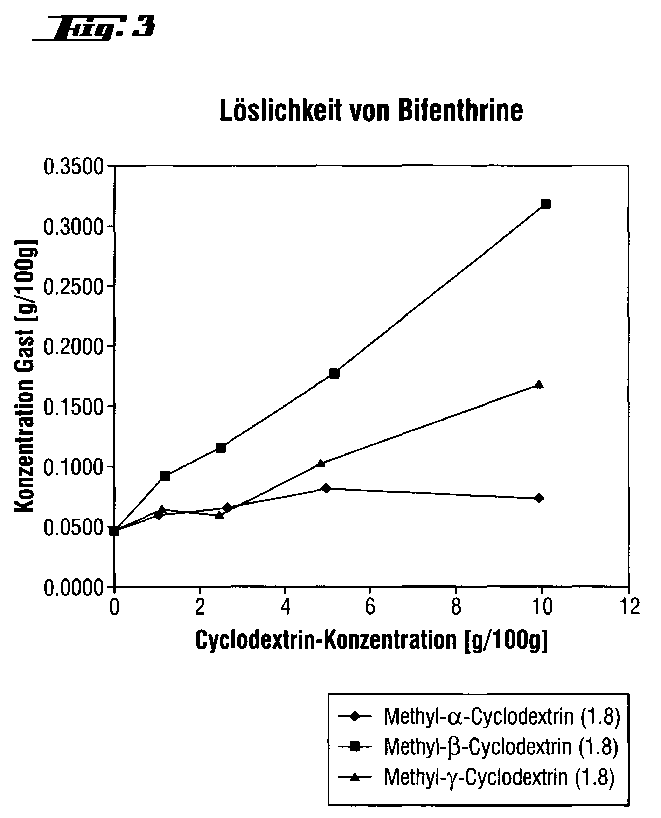

Die Ergebnisse sind in Fig. 3 dargestellt. Es ist ersichtlich, daß Bifenthrin in Wasser mit Hilfe von methylierten Cyclodextrinen solubilisiert werden kann.

### Beispiel 4: Herstellung einer Holzschutzformulierung A (Fungizider Holzschutz)

55 g wasserfreies Methyl-α-Cyclodextrin werden in 945 ml Wasser gelöst. Nach Zugabe von 3,0 g Tebuconazol und 3,0 g Propiconazol wird die Lösung auf 50°C erwärmt und die Wirkstoffe mit Hilfe eines Dispergiergeräts innerhalb von 3 Stunden gelöst. Es entsteht eine klare Lösung, die eine gebrauchsfertige Holzschutzformulierung mit einem Wirkstoffgehalt von 0,6 % darstellt.

### Beispiel 5: Herstellung einer Holzschutzformulierung B (Fungizider Holzschutz)

80 g wasserfreies Methyl-β-Cyclodextrin werden in 920 ml Wasser gelöst. Nach Zugabe von 2,0 g Tebuconazol, 2,0 g Propiconazol und 2,0 g IPBC wird die Mischung für ca. 8 Stunden bei 30°C gerührt. Es entsteht eine klare Lösung, die eine gebrauchsfertige Holzschutzformulierung darstellt.

### Beispiel 6: Herstellung einer Holzschutzformulierung C (Insektizider Holzschutz)

In 100 ml einer 4%-igen (w/w) wäßrigen Lösung von Methyl-β-Cyclodextriri werden 100 mg Cypermethrin gelöst. Die klare Lösung stellt eine gebrauchsfertige Holschutzformulierung dar.

Holzwürfel, die mit dieser Lösung imprägniert worden sind, zeigen keinen Befall von Termiten.

### Beispiel 7: Herstellung einer Holzschutzformulierung D (Fungizider und Insektizider Holzschutz)

15 g wasserfreies Methyl-β-Cyclodextrin werden in 985 ml Wasser gelöst. Nach Zugabe von 0,6 g Tebuconazol, 0,9 g Propiconazol und 0,06 g Bifenthrin wird die Mischung für ca. 20 Stunden bei 25°C gerührt. Es entsteht eine klare Lösung, die eine gebrauchsfertige Holzschutzformulierung darstellt. Holzwerkstoffe, die mit dieser Lösung imprägniert worden sind, zeigen, im Vergleich zu unbehandelten Holzwerkstoffen, weniger Befall von holzverfärbenden, holzzerstöreriden Pilzen und weniger Befall von holzzerstörenden Insekten (Hylotrupes bajulus).

### Beispiel 8: Herstellung eines Konzentrats einer Holzschutzformulierung

22 g von Methyl-β-Cyclodextrin werden in 85 g Wasser gelöst. Nach Zugabe von 0,5 g Tebuconazol, 1,0 g Propiconazol und 0,08 g Bifenthrin wird die Mischung für ca. 20 Stunden bei 40°C gerührt. Es entsteht eine klare Lösung, die ein Konzentrat einer Holzschutzformulierung darstellt. Durch Verdünnen mit Wasser im Verhältnis 1/10 (v/v) entsteht eine klare, gebrauchsfertige Holzschutzformulierung.

### Beispiel 9: Sprühtrocknen einer Holzschutzformulierung

Die Lösung aus Beispiel 4 wird in einem Laborsprühtrockner der Fa. Niro mit folgenden Parametern getrocknet.
- Temperatur der Trockenluft:: 210 °C
- Temperatur der Abluft:: 105 °C
- Art der Zerstäubung:: 2-Stoffdüse

Das erhaltene Pulver hat eine Restfeuchte von 1,5%. Der Wirkstoffgehalt wurde mit HPLC bestimmt: 4,81 % Tebuconazol, 4,72% Propiconazol.

Das Pulver kann wieder in Wasser gelöst werden. Es wird , bei entsprechender Konzentration, ein gebrauchsfertiges Holzschutzmittel erhalten.

### Beispiel 10: Anwendung als Holzschutzmittel gegenüber Insekten

Prüfhölzer werden mit einer Lösung von 1 g Cypermethrin und 25 g Methyl-β-Cyclodextrin in 74 ml Wasser vollimprägniert . Mit den so behandelten Prüfhölzern wurde ein Test nach DIN EN22 (Hylotrupes bajulus) durchgeführt. Die Mortalitätsrate der Larven betrug 87%.

### Beispiel 11: Penetrationstiefe

Prüfhölzer (Fichte: 250 x 60 x 40 mm) wurden in einem Tauchbad mit Formulierung A (erfindungsgemäß) bzw. Formulierung B (Vergleichsbeispiel) behandelt. Um die Eindringtiefe der Formulierung zu Testen, wurden nach dem Trocknen etwa 5 mm dicke Prüfkörper (5 x 60 x 40 mm) quer zur Länge des Prüfholzes herausgesägt. Die Prüfkörper wurden durch gamma-Bestrahlung sterilisiert und nach Inkubation mit dem Bläuepilz (Aureobasidium pullulans) 3 Wochen bei 23°C und 65% Luftfeuchte inkubiert. In der Eindringzone der Formulierung war kein Pilzwachstum zu beobachten, während der unbehandelte Kern durch den Pilz angefärbt war.

Tabelle 1 nennt die Zusammensetzung der Formulierungen A und B (Form A bzw. Form. B) sowie am behandelten Holz bestimmte Parameter.

**Tabelle 1**

| | Zusammensetzung | AP [kg/m³] | WA [kg/m³] | ET [mm] |
|---|---|---|---|---|
| Form. A (Erfindung) | 0,25% Propiconazol | 28,5 | 0,143 | 4 |
| | 0,25% IPBC | | | |
| | 2,5% Methyl-α-Cyclodextrin | | | |
| | 97% Wasser | | | |
| Form. B (Vergleich) | 0,35% Propiconazol | 20,8 | 0,146 | 2 |
| | 0,35% IPBC | | | |
| | 0,5 % ethoxyliertes Nonylphenol | | | |
| | 6,5% Berol 278 | | | |
| | 1% N-Methylpyrrolidon | | | |
| | 91,3% Wasser | | | |
| AP = Aufnahme der Prüfhölzer an Formulierung WA = Aufnahme an Wirkstoffen ET = Eindringtiefe | | | | |

Trotz vergleichbarer Aufnahme an Wirkstoffen, zeigt die erfindungsgemäße Formulierung eine höhere Penetration in das Holz.

### Beispiel 12: Wirksamkeitstest gegenüber holzverfärbende Pilze

Verglichen wurden 3 Formulierungen.
Formulierung C: Lösung der Wirkstoffe in Varsol 60 (aromatenarme Kohlenwasserstoffe)
Formulierung D: Emulsion der Wirkstoffe in einer wäßrigen Lösung von 0,6% ethoxyliertes Nonylphenol, 6,5% Berol 278 und 1,5% N-Methylpyrrolidon
Formulierung E: Lösung der Wirkstoffe in 4% Methyl-β-cyclodextrin in Wasser
Wirkstoffe in Formulierung: 1 : 1 Mischung (w/w) von Propiconazol und IPBC
Konzentrationen (Gesamtwirkstoffe) : 0.05% , 0.10%, 0.20%, 0.30% (w/w)

Holzscheiben (Pinie; Durchmesser: 50 mm, Höhe: 15 mm) werden in die Holzschutzlösung getaucht und an Luft getrocknet. Nach der Trocknung werden die Scheiben 1 Woche bei 80°C gelagert. Nach Aufbringen der Scheiben auf einen geeigneten Nährboden werden sie durch gamma-Bestrahlung sterilisiert und nach Incubation mit den Testpilzen 3 Wochen bei 23°C und 65% Luftfeuchte inkubiert .

Tabelle 2 zeigt die Ergebnisse: (Konzentration an Wirkstoffen, bei der kein Pilzwachstum auf dem Prüfkörper festgestellt wurde)

| Prüfpilz | Form. C (Vergleich: in Lösungsmittel) | Form.D (Vergleich: als Emulsion) | Form. E (Erfindung: mit Cyclodextrinen formuliert) |
|---|---|---|---|
| Aureobasidium pullulans | 0,20% | 0,10% | 0,05% |

Die Ergebnisse zeigen vorteilhafte niedrigere Einsatzkonzentrationen der Fungizide mit der erfindungsgemäßen Formulierung C bei dem Bläuepilz (Aureobasidium pullulans).

### Beispiel 13: Grenzwerte nach DIN EN 113 (Holzzerstörende Pilze)

### Formulierung 1: Wasserverdünnbare Formulierung, Wirkstoffe sind emulgiert (Vergleichsbeispiel)

| | | |
|---|---|---|
| 0.6% | Ethoxyliertes Nonylphenol | (Emulgiermittel) |
| 6.5% | Berol 278 | (Emulgiermittel) |
| 1.5% | N-Methylpyrrolidon | (Cosolvens) |
| 1.2% | Propiconazol | (Wirkstoff) |
| 0.9% | Tebuconazol | (Wirkstoff) |
| 0.5% | IPBC | (Wirkstoff) |
| 88.8% | Wasser | |

### Formulierung 2: Wasserverdünnbare Formulierung, Lösung von Wirkstoffen in wäßriger CD-Lösung (Erfindungsgemäßes Holzschutzmittel)

| | | |
|---|---|---|
| 1.2% | Propiconazol | (Wirkstoff) |
| 0.9% | Tebuconazol | (Wirkstoff) |
| 0.5% | IPBC | (Wirkstoff) |
| 25% | Methyl-β-Cyclodextrin | |
| 72.4% | Wasser | |

Prüfhölzer einer genormten Größe (15x25x50 mm) wurden im Vakuumverfahren vollimprägniert , zusätzlich einer Hitzebehandlung (1 Woche bei 80°C) oder einem Auslaugen in Wasser (72 Stunden unter fließendem Wasser) unterzogen und dem Angriff holzzerstörender Basidiomyceten ausgesetzt. Nach 16 Wochen wird der durch die Pilze verusachte Gewichtsverlust der Prüfhälzer ermittelt.

Eine akzeptabler Wirksamkeit wird definiert, wenn der festgestellte Gewichtsverlust < 3% ist.

Tabelle 3 zeigt die Wirkstoffkonzentration in kg Wirkstoff/ m³ Holz bei der o.g. Kriterium erfüllt wurde.

**Tabelle 3**

| Grenzwerte - Wirkstoffkonzentrationen | | | | |
|---|---|---|---|---|
| | Vergleich | Vergleich | Erfindung | Erfindung |
| Prüfpilz | Form. 1 nach Hitzebehandlung | Form. 1 nach Auslaugen | Form. 2 nach Hitzebehandlung | Form. 2 nach Auslaugen |
| Coniophora puteana | 4.4 kg/ m³ | 6.6 kg/ m³ | 3.65kg/m³ | 6.3 kg/m³ |
| Coriolus Versicolor | 15.0 kg/ m³ | 14.0 kg/m³ | 9.6 kg/m³ | 9.5 kg/m³ |

## Patentansprüche

1. Wäßriges oder wasserverdünnbares Holzschutzmittel dadurch gekennzeichnet, daß es einen Komplex bestehend aus einem Cyclodextrin-Derivat enthaltend einen hydrophoben Wirkstoff enthält.

2. Holzschutzmittel gemäß Anspruch 1, dadurch gekennzeichnet, daß die Cyclodextrin-Derivate ausgewählt sind aus der Gruppe der alkylierten, hydroxyalkylierten, acylierten, branched und Sulfoalkylether substituierten α, β oder γ-Cyclodextrine.

3. Holzschutzmittel gemäß Anspruch 2, dadurch gekennzeichnet, daß die Cyclodextrin-Derivate ausgewählt sind aus der Gruppe der alkylierten Cyclodextrine und hydroxyalkylierten α, β oder γ-Cyclodextrine.

4. Holzschutzmittel gemäß Anspruch 3, dadurch gekennzeichnet, daß die Cyclodextrin-Derivate ausgewählt aus der Gruppe der alkylierten α, β oder γ-Cyclodextrine.

5. Holzschutzmittel gemäß Anspruch 4, dadurch gekennzeichnet, daß die Cyclodextrin-Derivate ausgewählt aus der Gruppe der methylierten α, β oder γ-Cyclodextrine.

6. Holzschutzmittel gemäß einem der Ansprüche 1 bis 5, dadurch gekennzeichnet, daß es sich bei dem hydrophoben Wirkstoff um ein hydrophobes Fungizid und /oder Insektizid handelt.

7. Holzschutzmittel gemäß einem der Ansprüche 1 bis 5, dadurch gekennzeichnet, daß es sich bei dem hydrophoben Wirkstoff um eine Mischung verschiedener Fungizide und/oder Insektizide handelt.

8. Holzschutzmittel gemäß Anspruch 6 oder 7, dadurch gekennzeichnet, daß es sich bei dem Fungizid um ein Fungizid aus der Gruppe Triazole, Tolylfluanid (N-Dichlorfluormethylthio-N*'*,N*'*-dimethyl-N-p-tolylsulfamid), Dichlorfluanid (N-Dichlorfluormethylthio-N*'*,N*'*-dimethyl-N-phenylsulfamid), IPBC (3-Iodpropargyl-N-butylcarbamat), Isothiazolinone (N-Octyl-isothiazolin-3-on) und 4,5-Dichlor-N-Octylisothiazolin-3-on handelt.

9. Holzschutzmittel gemäß Anspruch 8, dadurch gekennzeichnet, daß es sich bei dem Fungizid um ein Fungizid ausgewählt aus der Gruppe Propiconazol (1-(2,4-Dichlorphenyl)-4-propyl-1,3-dioxolan-2-yl)-methyl)-1H-1,2,4-triazol), Tebuconazol ((RS)-1-(4-Chlorphenyl)-4,4-dimethyl-3-(1 H- 1,2,4- triazol- 1-ylmethyl)pentan- 3- ol), Azaconazol (1-(2,4-Dichlorphenyl)-1,3-dioxolan-2-yl)-methyl)-1H-1,2,4-triazol), Fenbuconazol (4-(4-Chlorphenyl)-2-phenyl-2-(1H-1,2,4-triazol- 1- yl-methyl)butyronitril) und Triadimenol ((1 RS,2 RS;1 RS,2 SR)-1-(4-Chlorphenoxy)-3,3-dimethyl-1-(1 H-1,2,4- triazol- 1-yl)butan- 2- ol), oder 4,5-Dichlor-N-Octyl-isothiazolin-3-on handelt.

10. Holzschutzmittel gemäß einem der Ansprüche 6 bis 9, dadurch gekennzeichnet, daß es sich bei dem Insektizid um ein synthetisches Pyrethroid, Bifenthrin, Fipronil, ein Benzolharnstoffderivat, einen Phosphorsäureester oder ein Carbamat handelt.

11. Holzschutzmittel gemäß Anspruch 10, dadurch gekennzeichnet, daß es sich bei dem Insektizid um Cypermethrin, Deltamethrin, Permethrin oder Bifenthrin handelt.

12. Wäßriges Holzschutzmittel gemäß einem der Ansprüche 1 bis 11, dadurch gekennzeichnet, daß es Wasser sowie 0,01 - 2 Gew.% hydrophoben Wirkstoff und 1 - 20 Gew.% Cyclodextrin-Derivat enthält.

13. Holzschutzkonzentrat gemäß einem der Ansprüche 1 bis 11, dadurch gekennzeichnet, daß es Wasser sowie 1- 5 Gew.% hydrophoben Wirkstoff und 5 - 70 Gew.% Cyclodextrin-Derivat, enthält.

14. In Wasser lösliches festes Holzschutzmittel gemäß einem der Ansprüche 1 bis 11, dadurch gekennzeichnet, daß es 2- 20 Gew.% hydrophoben Wirkstoff und 50 - 98 Gew.% Cyclodextrin-Derivat, enthält.

15. Holzschutzmittel gemäß einem der Ansprüche 1 bis 14, dadurch gekennzeichnet, daß es ferner eine Verbindung ausgewählt aus der folgenden Gruppe enthält: Bakterizide, Borverbindungen, Bindemittel, Netzmittel, Lösungsvermittler, Korrosionsschutzmittel, Verdickungsmittel, UV-Stabilisatoren, Sikkative, Farbstoffe, Pigmente, pH-Regulatoren.

16. Verfahren zur Herstellung eines Holzschutzmittels gemäß einem der Ansprüche 1 bis 15, dadurch gekennzeichnet, daß ein Cyclodextrin / Wirkstoff-Komplex in an sich bekannter Art hergestellt wird.

17. Verfahren zur Herstellung eines wäßrigen Holzschutzmittels gemäß Anspruche 12 oder 13, dadurch gekennzeichnet, daß ein festes Holzschutzmittel, enthaltend einen Komplex aus einem hydrophoben Wirkstoff und einem Cyclodextrin-Derivat, in Wasser gelöst wird.

18. Verfahren zum Schutz von Holz und Holzwerkstoffen, das dadurch gekennzeichnet ist, daß Holz oder ein Holzwerkstoff mit einer Holzschutzmittel gemäß einem der Ansprüche 1 bis 15, behandelt wird.

19. Verwendung von Komplexen aus einem CD Derivat und einem hydrophoben Wirkstoff als Holzschutzmittel.
